Europäisches Patentamt

European Patent Office

Office européen des brevets

(19)

(11) Numéro de publication: **0 197 826**
**B1**

(12) # FASCICULE DE BREVET EUROPEEN

(45) Date de publication du fascicule du brevet:
**17.11.88**

(51) Int. Cl.⁴: **F 16 D 65/56**

(21) Numéro de dépôt: **86400584.8**

(22) Date de dépôt: **19.03.86**

(54) **Frein à disque à réglage automatique.**

(30) Priorité: **27.03.85  FR 8504556**

(43) Date de publication de la demande:
**15.10.86 Bulletin 86/42**

(45) Mention de la délivrance du brevet:
**17.11.88 Bulletin 88/46**

(84) Etats contractants désignés:
**DE GB IT NL SE**

(56) Documents cités:
**FR - A - 2 075 425**
**FR - A - 2 321 074**
**GB - A - 2 004 007**
**US - A - 4 246 985**

(73) Titulaire: **BENDIX France, 126, rue de Stalingrad,
F-93700 Drancy (FR)**

(72) Inventeur: **Le Marchand, Claude, 8 Allée des Tilleuls,
F-95330 Domont (FR)**
Inventeur: **Gérard, Jean-Louis, 129 Boulevard Massena,
F-75013 Paris (FR)**

(74) Mandataire: **Lejet, Christian et al, Division Technique
Service Brevets BENDIX Europe 126, rue de Stalingrad,
F-93700 Drancy (FR)**

ACTORUM AG

## Description

L'invention se rapporte à un frein à disque à réglage automatique pour véhicule automobile.

L'invention concerne plus particulièrement un frein à disque du type à étrier coulissant comprenant un moteur de frein susceptible d'être actionné indépendamment soit par une pression de fluide soit par une commande mécanique. L'actionnement du moteur de frein sollicite directement un premier élément de friction en engagement de friction avec une première face d'un disque tournant et par réaction au travers de l'étrier coulissant un second élément de friction en engagement de friction avec une deuxième face du disque opposée à la première face. L'étrier coulisse par rapport à un support fixe qui reçoit directement ou indirectement le couple engendré par les éléments de friction. Dans les freins de ce type, compte tenu de l'épaisseur initiale des éléments de friction, il est nécessaire d'avoir un dispositif de réglage automatique placé sur la commande mécanique de manière à ce que la course de cette commande n'évolue pas en fonction de l'usure des éléments de friction. De nombreuses solutions ont été proposées pour résoudre ce problème. Néanmoins, ces systèmes présentent généralement l'inconvénient d'assurer un réglage quelle que soit la cause qui ait provoqué l'actionnement de ce réglage automatique. Ce type de dispositif se met en œuvre aussi bien pour compenser l'usure des éléments de friction, ce qui est normal, que pour compenser les déformations élastiques de l'étrier pour des pressions élevées de commande hydraulique, ce type de dispositif impose d'avoir une course morte ne faisant pas intervenir le réglage automatique relativement importante et de l'ordre de la déformation constatée sur l'étrier lors de son actionnement. Afin de résoudre ce problème, la demanderesse a proposé dans le brevet d'invention numéro 71.00748 publié sous le numéro FR-A-2 075 425 un frein à disque de ce type dans lequel le réglage automatique est neutralisé lorsque la pression de commande atteint une valeur prédéterminée au moyen d'une enceinte remplie d'une matière compressible et susceptible de se déformer élastiquement sous l'action de la pression de fluide, cette enceinte, en se déformant élastiquement, augmente la course morte au delà de la pression prédéterminée ce qui permet de ne pas faire intervenir le réglage automatique et éviter de compenser les déformations élastiques de l'étrier pour des pressions élevées de commande hydraulique.

Cette solution bien que répondant au problème posé présente les inconvénients suivants: l'enceinte élastique étant continuellement sollicitée en déformation, présente dans le temps une fatigue des matériaux la constituant pouvant aller jusqu'à rupture de celle-ci et l'effet recherché est non seulement supprimé mais de plus une rupture de cette enceinte introduit dans le circuit hydraulique un volume non négligeable de gaz qui peut entraîner jusqu'à la perte des capacités de freinage du frein, de plus la fabrication d'une telle enceinte présente des difficultés résultant dans des dispersions notables qui peuvent être sensibles sur l'équilibre des couples de freinage de deux roues d'un même essieu, enfin sur ce type de dispositif il n'est pas aisé de faire varier le niveau de la pression hydraulique pour laquelle on souhaite interdire le fonctionnement du réglage automatique.

Un autre frein à disque à réglage automatique correspondant au préambule de la revendication 1 est connu du document US-A-4.246.985.

L'invention a pour but un frein à disque du type décrit ci-dessus dans lequel ces inconvénients sont éliminés tout en présentant les avantages de celui-ci, et ceci en utilisant une technologie éprouvée, une fabrication aisée et par conséquent globalement d'un coût avantageux.

Dans ce but l'invention propose un frein à disque à réglage automatique du type comportant en étrier, un moteur de frein susceptible d'agir directement sur un premier élément de friction et par réaction du travers de l'étrier sur un deuxième élément de friction, ledit moteur de frein comportant une commande mécanique agissant sur un piston de commande hydraulique au travers d'un dispositif de réglage automatique, le dispositif de réglage étant formé par un dispositif à vis/écrou à pas réversible susceptible d'être actionné par le piston hydraulique au delà d'une course prédéterminée de celui-ci définie par un jeu entre un élément annulaire et une butée susceptible d'agir sur le dispositif à vis/écrou, ce jeu étant susceptible de varier en fonction de la pression dans une chambre et appliquée au piston de commande. Selon l'invention, l'élément annulaire est susceptible de coulisser dans un premier alésage formé dans le piston de commande, un piston de contrôle différentiel est susceptible de coulisser dans un deuxième alésage formé coaxialement dans le piston de commande en réponse à la différence entre la pression régnant dans la chambre et la pression atmosphérique, et pour toute pression de commande inférieure à une pression déterminée, l'élément annulaire vient en appui au moyen d'un élément élastique sur le piston différentiel lui-même en appui axial sur le fond du deuxième alésage, tandis que pour une pression de commande supérieure à cette pression déterminée, l'élément annulaire est susceptible d'être déplacé axialement par rapport au piston de commande à l'encontre de l'élément élastique au moyen du piston de contrôle différentiel, les premiers et deuxième alésages étant reliés à la chambre.

On comprend que grâce à une telle structure, la course morte est contrôlée par le déplacement de l'élément annulaire, déplacement contrôlé par un piston de contrôle, de technologie classique, dont la section active est facilement modifiable pour ajuster le déplacement de l'élément annulaire en fonction de la pression désirée, cette section active n'évoluant pas dans le temps et par conséquent la fiabilité du système est assurée.

D'autres caractéristiques et avantages du frein à disque, objet de la présente invention, apparaîtront à la lecture de la description détaillée du frein en se référant aux dessins annexés dans lesquels:

– la Figure 1 est une vue en coupe d'un étrier de frein réalisé conformément aux enseignements de la présente invention; et

– la Figure 2 est une vue partielle en coupe du frein de la Figure 1 lorsque la pression prédéterminée a été dépassée.

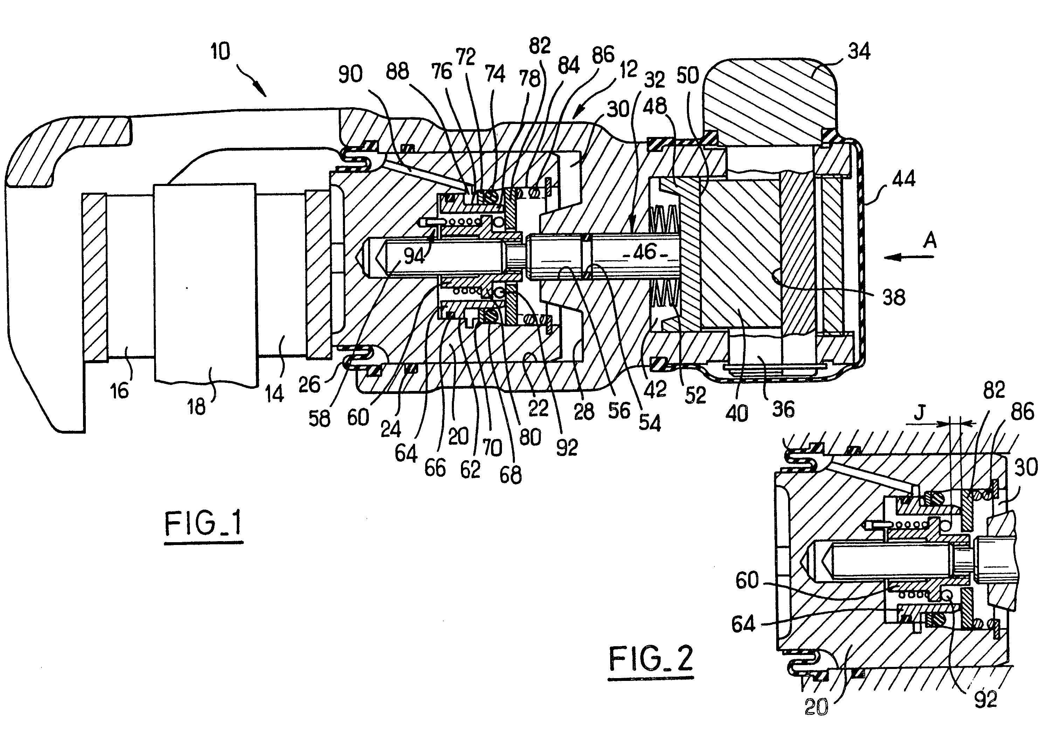

Le frein à disque représenté sur la Figure 1 comprend un étrier coulissant désigné dans son ensemble par la référence 10 monté sur un organe ou support fixe (non représenté) susceptible d'être fixé sur une partie fixe du véhicule (non représentée). L'étrier 10 comporte un moteur de frein désigné dans son ensemble par la référence 12 susceptible d'agir directement sur un premier élément de friction 14 et indirectement au travers de l'étrier coulissant sur un deuxième élément de friction 16 pour solliciter ceux-ci en engagement de friction avec un disque tournant 18. Le moteur de frein 12 comporte une commande hydraulique et une commande mécanique comme on le verra plus précisément.

D'une façon conventionnelle, la commande hydraulique est assurée par un piston de commande hydraulique 20 monté coulissant dans un alésage 22 formé dans le moteur de frein 12. L'étanchéité entre le piston 20 et l'alésage 22 est assurée par un joint 24, le piston étant par ailleurs protégé par un capuchon de piston 26. Le piston 20 et une paroi 28 de fond de l'alésage 22 définissent une chambre 30 susceptible d'être reliée à une source de pression (non représentée) comme par exemple le maître cylindre du véhicule.

La commande mécanique, désignée dans son ensemble par la référence 32, est assurée au moyen d'un levier 34 susceptible d'être relié à un câble ou analogue (non représenté) solidaire d'un axe 36 dans lequel est formée une rainure 38 recevant une biellette 40. L'axe 36 est reçu dans deux alésages formés dans le moteur de frein et immobilisé longitudinalement par rapport au moteur au moyen d'un épaulement formé sur le levier 34 d'une part et d'autre part au moyen d'un circlips au analogue. L'axe 36 et la biellette 40 sont logés dans un alésage borgne 42 formé dans le moteur de frein, la partie ouverte de l'alésage est pourvue d'un obturateur et l'ensemble est protégé par un capuchon flexible 44. L'alésage 42 reçoit également une vis 46 dont une portion épanouie 48 comporte une rainure 50 qui coopère avec la biellette 40. Entre le fond de l'alésage borgne 42 et la portion épanouie 48 est placé un ressort de rappel 52. La vis 46 comporte une portion cylindrique dans laquelle est formée une gorge comportant un joint 54. Ce joint 54 et la partie cylindrique de la vis 46 sont susceptibles de coulisser par rapport à un alésage 56 formé dans le corps du moteur de frein. La vis 46 se prolonge dans la chambre 30 par une portion filetée 58 à pas réversible sur laquelle est monté un écrou 60. Le piston de commande hydraulique 20 comporte un alésage 62 dans lequel est monté un piston de contrôle 64 reçu à coulissement étanche dans cet alésage 62 au moyen d'un joint d'étanchéité 66. Le piston hydraulique 20 comporte un deuxième alésage 68 d'un diamètre supérieur au diamètre de l'alésage 62 le passage d'un diamètre à l'autre formant une paroi 70 dirigée vers la chambre 30. Sur cette paroi 70 est plaquée une rondelle 72 qui limite les déplacements vers la gauche de la Figure 1 d'un joint d'étanchéité 74 placé entre l'alésage 68 et une surface extérieure 76 formée sur un prolongement 78 du piston de contrôle 64, ce prolongement 78 passant librement autour d'une collerette 80 formée sur l'écrou 60. L'extrémité du prolongement 78 du piston de contrôle 60 est en appui axial sur un élément annulaire 82 monté dans un troisième alésage 84 du piston de commande 20. Du côté de la chambre 30, l'élément annulaire 82 est sollicité vers la gauche de la Figure 1 au moyen d'un ressort 86 dont l'autre extrémité est en appui sur un circlips ou analogue solidaire du piston 20. L'élément annulaire 82 est susceptible de coulisser dans l'alésage 84 du fait du ressort 86. En particulier, au repos, comme représenté sur la Figure 1, le ressort 86 repousse l'élément annulaire 82 vers la gauche de la Figure 1 qui lui-même repousse le piston de contrôle 64 vers la gauche pour venir en appui sur le fond de l'alésage 62. Entre l'alésage 62 le piston 64 et le joint d'étanchéité 74 est formée une chambre 88 reliée à l'atmosphère au moyen d'un perçage 90. Entre la collerette 80 de l'écrou 60 et l'élément annulaire 82 est placée une butée à bille 92 présentant un jeu axial J entre la collerette 80 et l'élément annulaire 82 définissant le jeu fonctionnel au repos; ce jeu J étant très faible n'a été représenté, comme on le verra plus tard, que sur la Figure 2 où ce jeu J est suffisamment agrandi pour être visible. La colerette 80 et l'élément annulaire 82 formant chemin de roulement pour la butée 92. l'écrou 60 est relié au piston 20 au travers d'un embrayage unidirectionnel désigné dans son ensemble par la référence 94 et réalisé dans le mode de réalisation représenté par un ressort d'embrayage monté sur une surface cylindrique de l'écrou 60 et dont une extrémité pénètre dans un perçage du piston 20. Le piston de contrôle 64 forme un piston différentiel du fait d'une part de son coulissement sur l'alésage 62 du piston 20 et du joint 66 et d'autre part par le diamètre 76 de son prolongement 78 coopérant avec le joint 74.

Le frein qui vient d'être décrit à l'aide de la Figure 1 fonctionne de la manière suivante:

Au repos, les différents éléments du frein occupent les positions représentées. Lorsque le frein est actionné au moyen de la commande mécanique, le levier 34 et l'axe 36 sollicitent la biellette dans une direction générale représentée par la flèche A. La biellette 40 au travers de la rainure 50 pousse la portion épanouie 48 de la vis 46 à l'encontre du ressort 52. Comme la portion cylindrique de la vis peut coulisser par rapport à l'alésage 56 formé dans le moteur de frein, le vis 46 se déplace également dans le sens de la flèche A. Ce mouvement de la vis 46 au moyen de la portion filetée 58 est transmis à l'écrou 60, la rotation de celui-ci étant empêchée par l'embrayage unidirectionnel 94, l'écrou 60 vient en appui sur le piston de commande 20. L'effort de la biellette 40 est donc transmis à l'élément de friction 14 et par réaction de cet élément de friction sur le disque 18 apparaît une autre réaction sur l'axe 36 qui entraîne en coulissement l'étrier 10 dans le sens contraire à celui défini par la flèche A ce qui amène l'élément de friction 16 en contact du disque 18. Au relâchement de la commande manuelle les différents éléments du frein reprennent les positions représentées.

Lorsque le frein est actionné au moyen de la commande hydraulique, une pression hydraulique est appliquée dans la chambre 30 de manière à solliciter le piston 20 vers la gauche en se référant à la Figure 1. Si le mouvement du piston 20 par rapport à l'écrou 60 ne dépasse pas le jeu fonctionnel défini entre la butée à billes 92 la pièce annulaire 82 et la collerette 80 le mouvement du piston 20 n'a aucun effet sur le réglage automatique. Si le mouvement du piston 20 est supérieur au jeu fonctionnel prédéterminé l'écrou 60 est entraîné vers la gauche par le piston 20 au travers de la butée à billes de la pièce annulaire 82 et du ressort 86, lui-même entraîné par le circlips solidaire du piston. La vis 46 étant immobilisée axialement au moyen du ressort 52, l'écrou 60 grâce au pas réversible tourne par rapport à la vis 46 pour pouvoir suivre le mouvement du piston 20, l'embrayage unidirectionnel 94 autorisant cette rotation. Dans cette phase de fonctionnement, le piston de contrôle 64 est toujours appliqué sur le fond de l'alésage 62 et n'intervient pas sur l'élément annulaire 82. Si la pression hydraulique est alors relâchée, le joint 24 de façon conventionnelle fait légèrement revenir le piston 20, l'embrayage unidirectionnel 94 interdisant la rotation de l'écrou 60. Comme à l'application du freinage, l'écrou a tourné en se déplaçant vers la gauche, le dispositif de réglage automatique se trouve donc maintenant dans une nouvelle position décalleé vers la gauche et interdit au piston 20 de prendre sa position initiale.

Si, par contre, le relâchement du freinage d'intervient pas immédiatement, la pression dans la chambre 30 continue à monter et, sous l'effet cette pression et de l'effort engendré par le piston 20, l'étrier se déforme. Il est donc nécessaire d'éviter le fonctionnement du réglage avant le début de la déformation mécanique de l'étrier.

Lorsque la pression dans la chambre 30 atteint le niveau défini par la section active du piston différentiel et de l'effort du ressort 86, le piston de contrôle 64 se déplace sous l'effet de cette pression vers la droite de la Figure 1 et déplace, à l'encontre du ressort 86, l'élément annulaire 82 augmentant ainsi le jeu de la butée à billes 92 entre la collerette 80 de l'écrou 60 et l'élément annulaire 82, cette augmentation de jeu supprime l'action de l'élément annulaire 82 sur l'écrou 60 et le réglage automatique est neutralisé, l'écrou 60 n'étant plus obligé de suivre les mouvements du piston 20. Si la pression continue à monter, le piston différentiel 64 se déplace davantage vers la droite de la Figure 1 à l'encontre du ressort 86 et libère complètement l'écrou de réglage 60.

En se référant à la Figure 2, où a été représenté l'ensemble du réglage automatique lorsque la pression dans la chambre 30 a dépassé la pression prédéterminée, on voit que le piston différentiel 60 s'est déplacé vers la droite de cette Figure 2 en repoussant l'élément annulaire 82 et celà en faisant apparaître un jeu fonctionnel J tel que l'élément annulaire 82 ne peut en aucun cas agir sur la butée 92 et donc sur l'écrou 60 du réglage automatique.

Lorsque la pression hydraulique est relâchée de la chambre 30, dans un premier temps le piston 20 se déplace sur la droite des Figures 1 ou 2 du fait de la déformation élastique dans l'étrier 10 puis dans un deuxième temps ce piston continue à se déplacer vers la droite mais simultanément le ressort 86 déplace vers la gauche par rapport au piston 20 le piston différentiel 64 qui progressivement retrouve sa position représentée sur la Figure 1 en appui sur le fond de l'alésage 62 définissant ainsi la position au repos de l'élément annulaire 82, enfin dans un troisième temps d'une façon conventionnelle le joint 24 fait légèrement reculer le piston 20 vers la droite assurant ainsi le jeu fonctionnel initial entre la butée à billes 92 et ses deux chemins de roulement c'est-à-dire la collerette 80 de l'écrou 60 et l'élément annulaire 82.

Comme on le voit de la description qui précède, le dispositif objet de l'invention permet de contrôler le jeu fonctionnel au moyen d'un piston différentiel simple et fiable l'accroîssement du jeu fonctionnel étant tel que pour toute pression dépassant une valeur prédéterminée le piston différentiel se déplace en relation avec la pression régnant dans la chambre 30 et par conséquent la consommation supplémentaire de fluide due au déplacement du piston différentiel est progressive en fonction de la pression hydraulique appliquée permettant ainsi de réduire la course pédale pour toute les pressions intermédiaires entre la position initiale et la position pour laquelle le piston différentiel vient en butée sur le piston hydraulique 20 au travers de l'élément annulaire 82 et du ressort 86 amené à spires jointives formant ainsi ladite butée.

De plus cette structure permet le montage du piston de commande équipé de l'écrou et du piston différentiel, sans modifier les usinages du moteur de frein et par conséquent un frein qui n'est pas équipé du dispositif de neutralisation objet de la présente invention peut, sans modifications, recevoir un tel piston et bénéficier des avantages de la présente invention. En effet, l'ensemble piston 20, piston 64, écrou 60, élément annulaire 82 et ressort 86 formant sous-ensemble démontable en bloc peuvent facilement être montés sur un frein existant. De plus cette structure permet par simple remplacement de ce piston 20 équipé de faire varier la pression prédéterminée en modifiant soit les caractéristiques du ressort 86 soit les deux diamètres du piston différentiel 64.

Il est bien évident que l'invention n'est pas limitée au mode de réalisation décrit ci-dessus et que, en particulier, le ressort 86 peut être réalisé à partir de rondelles Belleville, que le piston 20 peut être équipé d'une butée franche pour l'élément annulaire 82 et enfin que le piston différentiel et plus précisément les étanchéités de celui-ci peuvent être réalisées de toute manière à la portée de l'homme de l'art.

## Revendications

1. Frein à disque à réglage automatique du type comprenant un étrier (10), un moteur de frein (12) susceptible d'agir directement sur un premier élément de friction (14) et par réaction au travers de l'étrier (10) sur un deuxième élément de friction (16), le moteur de frein (12) comportant une commande mécanique (32) agissant sur un piston de commande hydraulique (20) au travers d'un dispositif de réglage automatique, le dispositif de réglage étant formé par un dispositif à vis/écrou (46, 60) à pas réversible susceptible d'être actionné par le piston hydraulique (20) au delà d'une course prédéterminée de celui-ci définie par un jeu (J) entre un élément annulaire (82) et une butée (92) susceptible d'agir sur le dispositif à vis/écrou (46, 60), ledit jeu (J) étant susceptible de varier en fonction de la pression dans une chambre (30) et qui est appliquée au dit piston de commande (20), caractérisée en ce que ledit élément annulaire (82) est susceptible de coulisser dans un premier alésage (84) formé dans le piston de commande (20), qu'un piston de contrôle différentiel (64) est susceptible de coulisser dans un deuxième alésage (62) formé coaxialement dans ledit piston de commande (20) en réponse à la différence entre la pression régnant dans ladite chambre (30) et la pression atmosphérique, et que pour toute pression de commande inférieure à une pression déterminée, l'élément annulaire (82) vient en appui au moyen d'un élément élastique (86) sur ledit piston différentiel (64) lui-même en appui axial sur le fond dudit deuxième alésage (62), tandis que pour une pression de commande supérieure à ladite pression déterminée, l'élément annulaire (82) est susceptible d'être déplacé axialement par rapport au piston de commande (20) à l'encontre dudit élément élastique (86) au moyen dudit piston de contrôle différentiel (64), lesdits premier et deuxième alésages (84, 62) étant reliés à ladite chambre (30)

2. Frein à disque revendication 1, caractérisée en ce que le piston de commande (20), le piston de contrôle (64), l'élément annulaire (82) et l'écrou (60) du dispositif à vis/écrou (46, 60) forment un ensemble démontable en bloc.

## Claims

1. Disc-brake with automatic adjustment of the type comprising a calliper (10), a brake actuator (12) which is adapted to act directly upon a first friction component (14) and, by reaction through the calliper (10) upon a second friction component (16), the brake actuator (12) incorporating a mechanical control (32) acting upon a hydraulic control piston (20) through an automatic adjustment device, the adjustment device being formed by a screw and nut device (46, 60) with reversible pitch which is operable by the hydraulic piston (20) beyond a predetermined travel of the latter defined by a clearance (J) between an annular component (82) and a thrust bearing (92) which is adapted to act upon the screw and nut device (46, 60), the clearance (J) being capable of being varied as a function of the pressure in a chamber (30) and which is applied to the said control piston (20), characterized in that the said annular component (82) is capable of sliding in a first bore (84) formed in the control piston (20), in that a differential monitoring piston (64) is capable of sliding in a second bore (62) formed coaxially in the said control piston (20) in response to the difference between the pressure prevailing in the said chamber (30) and the atmospheric pressure, and in that, for any control pressure below a specific pressure, the annular component (82) comes to bear by means of an elastic element (86) on the said differential piston (64), itself bearing axially on the bottom of the said second bore (62), whilst, for a control pressure higher than the said specific pressure, the annular component (82) is capable of being moved axially relative to the control piston (20) counter to the said elastic element (86) by means of the said differential monitoring piston (64), the said first and second bores (84, 62) being connected to the said chamber (30).

2. Disc-brake according to Claim 1, characterized in that the control piston (20), the monitoring piston (64), the annular component (82) and the nut (60) of the screw and nut device (46, 60) form an assembly which is removable as a unit.

## Patentansprüche

1. Selbsttätig nachstellbare Scheibenbremse mit einem Bremssattel (10), einem Bremsmotor (12), der direkt ein erstes Reibungselement (14) und indirekt über den Bremssattel (10) ein zweites Reibungselement (16) betätigt, wobei der Bremsmotor eine Betätigungseinrichtung (32) enthält, die über eine automatische Nachstellvorrichtung auf einen hydraulischen Betätigungskolben (20) wirkt, und wobei die Nachstellvorrichtung aus einer reversierbaren Schrauben-/Mutteranordnung (46, 60) besteht, die von dem hydraulischen Kolben (20) nach Überschreitung eines vorher festgelegten Weges betätigt wird, der vorher festgelegte Weg durch ein Spiel (J) zwischen einem ringförmigen Element (82) und einem Anschlag (92) definiert wird, der Anschlag (92) auf die Schrauben-/Mutteranordnung (46, 60) wirkt und das erwähnte Spiel (J) in Abhängigkeit von dem in einer Kammer (30) herrschenden und auf den Betätigungskolben (20) wirkenden Druck variiert, dadurch gekennzeichnet, dass das ringförmige Element (82) verschiebbar in einer ersten Bohrung (84) in dem Betätigungskolben (20) aufgenommen ist, dass ein Differentialsteuerkolben (64) in einer zweiten, in dem erwähnten Kolben koaxial geformten Bohrung (62) in Abhängigkeit von der zwischen der Kammer (30) und dem Atmosphärendruck herrschenden Druckdifferenz verschoben wird und dass das ringförmige Element (82) bei jedem Betätigungsdruck, der niedriger als ein vorgegebener Druck ist, durch ein elastisches Element (86) an den erwähnten Differentialkolben (64) gedrückt wird, der seinerseits in axialer Richtung an dem Ende der zweiten Bohrung (62) anliegt, während bei einem Betätigungsdruck, der grösser als der vorgegebene Druck ist, das ringförmige Element (82) in axialer Richtung zu dem Betätigungskolben (20) gegen das erwähnte elastische Element (86) mittels des erwähnten Differentialsteuerkolbens (64) verschoben wird, wobei die erste und zweite Bohrung (84, 62) in Verbindung mit der Kammer (30) stehen.

2. Scheibenbremse nach Anspruch 1, dadurch gekennzeichnet, dass der Betätigungskolben (20), der Steuerkolben (64), das ringförmige Element (82) und die Mutter (60) der Schrauben-/Mutteranordnung (46, 60) eine Einheit bilden, die im ganzen ausgewechselt werden kann.

FIG_1

FIG_2

0197826